# EUROPÄISCHE PATENTSCHRIFT

(11) **EP 3 771 878 B1**
(45) Veröffentlichungstag und Bekanntmachung des Hinweises auf die Patenterteilung: **19.07.2023**
(21) Anmeldenummer: 20186967.4
(22) Anmeldetag: 21.07.2020
(51) Int. Cl.: F28F 3/14, F28F 21/08, F28F 9/02

(54) **VERFAHREN ZUR HERSTELLUNG EINES PLATTENWÄRMETAUSCHERS**
METHOD OF PRODUCING A PLATE HEAT EXCHANGER
PROCÉDÉ DE FABRICATION D'UN ÉCHANGEUR DE CHALEUR À PLAQUES

(30) Priorität: 01.08.2019 DE 102019120862
(43) Veröffentlichungstag der Anmeldung: 03.02.2021
(60) Teilanmeldung: 21156850.6
(73) Patentinhaber: Benteler Automobiltechnik GmbH, 33102 Paderborn (DE)
(72) Erfinder: Böhnke, Max, 33102 Paderborn (DE); Huschen, Ulrich, 33165 Lichtenau (DE); Grußmann, Elmar, 33184 Altenbeken-Buke (DE); Rusche, Ulrich, 59457 Werl (DE); Grewe, Jochem, 33154 Salzkotten (DE)
(74) Vertreter: Griepenstroh, Jörg

(56) Entgegenhaltungen:
- WO-A1-2010/132018
- DE-A1- 4 426 097
- DE-A1-102012 009 148
- DE-A1-102014 219 812
- DE-B4-102012 009 148

## Beschreibung

Die Erfindung betrifft ein Verfahren zum Herstellen eines Plattenwärmetauschers.

Plattenwärmetauscher werden beispielsweise eingesetzt, um Speichereinheiten für elektrische Energie in Kraftfahrzeugen zu temperieren. Dabei ist es bekannt mit einem großflächigen Plattenwärmetauscher alle Speichereinheiten, die einem Behälter angeordnet sind, zu temperieren. Ebenso ist es bekannt, einzelne Module von Speichereinheiten zu temperieren. Insbesondere sollen die Speichereinheiten im Betrieb oder beim Aufladen gekühlt werden.

Plattenwärmetauscher sind darüber hinaus in vielen anderen technischen Bereichen einsetzbar und weisen daher eine große Bandbreite an Abmessungen auf.

Aus der DE 10 2010 051 106 A1 ist ein Plattenwärmetauscher bekannt, der aus zwei Plattenelementen aus Aluminium besteht. In die Plattenelemente sind Ausbuchtungen eingeformt, die miteinander mindestens einen Kühlkanal bilden. Die Plattenelemente werden danach schweißtechnisch miteinander verbunden. Dieses Herstellungsverfahren macht ein separates Umformwerkzeug notwendig. Zudem ist Schweißen ein aufwändiges und kostspieliges Verfahren, wobei zudem mit steigenden Abmessungen auch die Länge der Schweißnaht ansteigt. Auch der Wärmeeintrag ist nachteilig für die Festigkeit des Materials.

In der DE 10 2014 219 812 A1 wird ein Verfahren offenbart, bei dem zwischen zwei Metallblechen ein Trennmittel angeordnet, um Kanalstrukturen zu definieren. Die Metallbleche werden in einem Roll-Bonding-Verfahren unlösbar miteinander verbunden. Anschließend werden die mit Trennmittel behandelten Bereiche aufgeblasen, um die Kanalstrukturen auszubilden. Beim Roll-Bonding sinkt aber die Maßhaltigkeit mit zunehmender Plattengröße. Zudem ist die Auswahl an möglichen Materialpaarungen für die Metallbleche beschränkt.

Schließlich ist es noch bekannt, bei der Herstellung eines Plattenwärmetauschers die beiden Platten miteinander zu verlöten. Die DE 2012 009 148 B4 offenbart ein Bauteil aus zwei Schichten aus Metall, von denen mindestens eine profiliert ist, so dass zwischen den beiden Schichten ein Hohlraum gebildet wird, um darin ein Medium zu fördern. Die beiden Schichten können auch löttechnisch miteinander verbunden werden. Es ist üblich, das Löten in einem Ofen durchzuführen, durch den die Bauteile gefördert werden. Neben den Ofen treten auch ein Umformwerkzeug und spezielle Fixiergestelle für die Bauteile im Ofen, was hohe Investitionskosten mit sich bringt. Zudem dauert der Lötvorgang ein bis zwei Stunden, was mit langen Taktzeiten einhergeht. Diese langandauernde Wärmebeaufschlagung hat zudem den Nachteil, dass bei höherfesten Aluminium-Legierungen Magnesium-Ausscheidungen auftreten, die die Lotverbindung schwächen. Damit sind diese Materialien für einen Plattenwärmetauscher nicht verwendbar.

Es ist daher die Aufgabe der vorliegenden Erfindung, ein Verfahren bereitzustellen, das die kostengünstige, hochmaßhaltige und hinsichtlich der Materialien flexible Herstellung von Plattenwärmetauschern mit langer Lebensdauer ermöglicht.

Diese Aufgabe wird gelöst durch ein Verfahren mit den Merkmalen des Anspruchs 1.

Besondere Ausgestaltungen der Erfindung sind Gegenstand der abhängigen Ansprüche.

Die Erfindung betrifft Verfahren zum Herstellen eines Plattenwärmetauschers mit folgenden Schritten:
- Bereitstellen zweier Platten aus einem metallischen Werkstoff, wobei die Platten in Anlage gebracht werden, wobei ein Lotwerkstoff zwischen den Platten angeordnet wird,
- Aufheizen der Platten auf eine erste Temperatur,
- Einlegen der Platten in ein Werkzeug, dessen Formflächen Kavitäten für vorgesehenen Kanalstrukturen aufweisen,
- Ausbilden von Kanalstrukturen durch lokale innendrucktechnische Umformung zumindest einer Platte unter Beaufschlagung mit Druck durch das Werkzeug,
- Aufheizen der Platten auf eine zweite Temperatur.
- Löttechnisches Verbinden der Platten an den in Anlage befindlichen Flächen.

Die Platten werden zusammen mit dem zwischen den Platten angeordneten Lotwerkstoff zunächst auf eine erste Temperatur erwärmt. Diese ist so gewählt, dass zwar das Material zumindest einer der Platten leichter formbar ist, aber der Lotwerkstoff noch nicht geschmolzen ist. Bevorzugt beträgt die erste Temperatur 200°C bis 550°C, besonders bevorzugt 300°C bis 350°C.

Beim innendrucktechnischen Umformen wird ein Medium unter hohem Druck zwischen die Platten geleitet. Im Bereich der Kavitäten kann sich das Material der Platten verformen und an die Innenoberflächen der Kavitäten anlegen, wodurch hohle Kanalstrukturen geschaffen werden, während in den Bereichen abseits der Kavitäten die Platten vollflächig in Anlage bleiben. Gleichzeitig werden die Platten relativ zueinander in Position gehalten. Das Verfahren führt durch die reproduzierbare Ausbildung präziser Kanalstrukturen in einem Werkzeug in vorteilhafter Weise zu einem hochmaßhaltigen Plattenwärmetauscher.

Die innendrucktechnische Umformung erfolgt bevorzugt mittels eines inerten Gases, beispielsweise Stickstoff. Das Gas kann dabei vorgewärmt sein.

Beim Ausbilden der Kanalstrukturen können auch steifigkeitserhöhende Sicken in den Plattenwärmetauscher eingebracht werden, die nicht in Fluidverbindung zu den Kanalstrukturen stehen.

Die Platten werden nachfolgend auf eine zweite Temperatur erwärmt, bei der der Lotwerkstoff aufschmilzt und die Lotverbindung an den in Anlage befindlichen Flächen entsteht. Damit wird eine stabile Verbindung zwischen den Platten geschaffen. Vorteilhafterweise beträgt die zweite Temperatur 550°C bis 650°C, bevorzugt 600°C bis 615°C.

Bevorzugt werden die Platten in ihrem mit Lotwerkstoff versehenen Bereichen gleichmäßig auf die zweite Temperatur aufgeheizt werden, wobei die Temperaturspanne ΔT über die Platte hinweg kleiner als 50 K, bevorzugt kleiner als 10 K beträgt.

Eine vorteilhafte Ausgestaltung der Erfindung sieht vor, dass das Werkzeug beheizbar ist und das Aufheizen auf die erste Temperatur in dem Werkzeug erfolgt. Das Aufheizen der Platten erfolgt mittels Wärmeleitung, was zu einer besonders zügigen Erwärmung der Platten führt. Weiterhin kann mit der innendrucktechnischen Umformung unmittelbar beim Erreichen der ersten Temperatur begonnen werden. Somit kann eine Verkürzung der Taktzeiten erreicht werden und zusätzliche Vorrichtungen zum Erwärmen und zum Transport der Platten wird eingespart.

Weiterhin ist es vorteilhaft, wenn das löttechnische Verbinden der Platten ebenfalls in dem Werkzeug erfolgt unter Beaufschlagung mit Druck durch das Werkzeug. Das bedeutet, dass die Platten nach dem innendrucktechnischen Umformen bevorzugt in dem Werkzeug verbleiben und weiter auf die zweite Temperatur aufgeheizt werden. Auch dies erfolgt durch den unmittelbaren Kontakt mit dem Werkzeug in einer sehr kurzen Zeit. Vorteilhaft ist hier auch, dass die Platten unverrückbar relativ zueinander gelagert sind, so dass kein Verzug oder Verschieben relativ zueinander mehr möglich sind. Dies führt ebenfalls zu einer hohen Maßhaltigkeit bei den Plattenwärmetauschern.

Die Gesamtdauer des Verfahrens beträgt wenige Minuten, was beträchtlich kürzer ist als die übliche Verweildauer in einem Lötofen von bis zu mehreren Stunden.

Das Werkzeug ist vorzugsweise vorgeheizt. Insbesondere ist es auf eine Temperatur von 550°C bis 700°C, bevorzugt auf eine Temperatur von 600°C bis 650°C, besonders bevorzugt auf eine Temperatur von 615°C bis 625°C vorgeheizt. Nach dem Einlegen der Platten in das vorgeheizte Werkzeug erfolgt unmittelbar eine Erwärmung der Platten und des Lotmaterials, die umso schneller erfolgt, je höher die Temperatur des Werkzeugs ist. Auch dies trägt zu einer Verringerung der Taktzeiten bei.

In einer vorteilhaften Ausgestaltung der Erfindung ist vorgesehen, dass benachbart zu den Kavitäten der Formflächen und/oder werkzeugumlaufend Abdichtsicken vorgesehen sind, um bei der innendrucktechnischen Umformung, die entstehenden Kanalstrukturen abzudichten. Damit werden die Platten lokal mit hohem Druck gegeneinandergepresst, so dass die innendrucktechnische Umformung im Bereich der Kavitäten präzise und hochmaßhaltig erfolgt.

Vorteilhafterweise ist eine Platte als Grundplatte, die andere Platte als Umformplatte vorgesehen und die Kanalstrukturen werden in der Umformplatte erzeugt. Das bedeutet, dass nur eine der beiden Platten innendrucktechnisch umgeformt wird und das Werkzeug nur in einem Werkzeugteil die dafür notwendigen Kavitäten aufweist. Dies reduziert den Aufwand für die Bereitstellung des Werkzeuges. Zudem ist es möglich, der Grundplatte eine zusätzliche Funktion zuzuweisen, beispielsweise als Bodenschutzblech.

Vorzugsweise weist die Grundplatte eine Dicke von 0,5 bis 5 Millimetern, bevorzugt 1 bis 2 Millimetern, auf.

Vorzugsweise weist die Umformplatte eine Dicke von 0,2 bis 2 Millimetern, bevorzugt 0,8 bis 1 Millimeter, auf.

Die Dicke der Platten hängt auch vom verwendeten Material, beispielsweise der konkreten Legierung und/oder Vorbehandlung, und dessen Eigenschaften ab.

Eine weitere vorteilhafte Ausführung der Erfindung sieht vor, dass die Platten aus einer Aluminiumlegierung, bevorzugt aus einer hochfesten Aluminiumlegierung, bestehen. Dabei können die einzelnen Platten aus unterschiedlichen Legierungen bestehen. Dies können Legierungen sein, die typischerweise in löttechnischen Verfahren verwendet werden, beispielsweise Legerungen der 3000er-Serie, etwa 3003 oder 3005. Es kann sich aber auch um Legierungen der 5000er-Serie handeln. Legierungen der 6000er- und 7000er-Serien gelten gemeinhin als schwer lötbar, da sich während des gemeinhin langsamen Aufheizens auf die Löttemperatur Magnesium-Ausscheidungen an der Oberfläche bilden. Das erfindungsgemäße Verfahren ermöglicht jedoch eine sehr rasche Erwärmung der Platten im Bereich von Sekunden oder wenigen Minuten im Gegensatz von bis zu mehreren Stunden in herkömmlichen Ofenlötprozessen. Das bedeutet, dass auch die Magnesium-Ausscheidungen weitgehend vermieden werden können. Damit kommen durch das erfindungsgemäße Verfahren auch Aluminiumlegierungen zur Verwendung in einem Plattenwärmetauscher in Betracht, die üblicherweise nicht verwendet werden können. Höchstfeste Aluminiumlegierungen ermöglichen wiederum zusätzliche Funktionen, die der Plattenwärmetauscher übernehmen kann, beispielsweise als Strukturbauteil.

Bevorzugt ist eine der beiden Platten mit einer plattierten Lotschicht versehen. Dies erleichtert die Handhabung der Platten und vermeidet einen zusätzlichen Arbeitsschritt, um das Lot aufzutragen.

Vorteilhafterweise werden die Platten so angeordnet, dass die lotplattierte Platte oben im Werkzeug angeordnet ist. Während des Lötvorgangs können Diffusionsprozesse zur unteren Platte schwerkraftunterstützt ablaufen und für eine stabilere Verbindung sorgen.

Weiterhin wird in zumindest einer der Platten eine Anschlussöffnung erzeugt. Dies kann beispielsweise durch Stanzen, Schneiden oder ein anderes Verfahren erfolgen. Die Anschlussöffnung dient der Aufnahme eines Anschlusselements, durch das später das Kühlmedium ein- beziehungsweise ausgeleitet wird.

Weiterhin wird an oder in dieser Anschlussöffnung ein Anschlusselement angeordnet. Bevorzugt wird das Anschlusselement an oder in der Anschlussöffnung angeordnet. Besonders bevorzugt wird das Anschlusselement mit einem Lotring und/oder einer Lotpaste in der Anschlussöffnung angeordnet. So kann die Verbindung zwischen Anschlusselement und zugehöriger Platte simultan zum löttechnischen Verbinden der Platten erfolgen.

Weiterhin sieht eine besondere Ausgestaltung der Erfindung vor, dass das Medium für das innendrucktechnische Umformen durch die Anschlussöffnung eingebracht wird. Somit sind keine zusätzlichen Anschlüsse für das Einleiten des Mediums für die innendrucktechnische Umformung notwendig. Die für das Ein- oder Ausleiten eines Kühlmediums ohnehin vorhandenen Anschlüsse werden genutzt.

Vorteilhafterweise wird in dem erfindungsgemäßen Verfahren ein Werkzeug eingesetzt, dessen Formflächen mit einer Beschichtung versehen sind, um eine Anhaftung der Platten zu verhindern. Dabei kann es sich beispielsweise um eine Beschichtung aus Keramik oder anderen geeigneten Materialien handeln.

Zusammen damit oder alternativ kann vorgesehen sein, dass zwischen den Platten und den Formflächen des Werkzeugs ein Trennmittel angeordnet ist, um eine Anhaftung der Platten zu verhindern. Bei dem Trennmittel kann es sich beispielsweise um ein geeignetes Fluid handeln, das auf die Platten oder die Formflächen des Werkzeugs aufgetragen wird. Alternativ kann es sich um ein Folienblech handeln, dass zwischen Platte und Werkzeug eingelegt wird. Alternativ kann es sich um ein Verschleißblech handeln, das auch lösbar in dem Werkzeug festgelegt ist.

Bevorzugt ist vorgesehen, dass beim innendrucktechnischen Umformen ein erster Druck durch das Werkzeug aufgebracht wird und beim löttechnischen Verbinden der Platten ein zweiter Druck durch das Werkzeug aufgebracht wird, wobei der erste Druck höher ist als der zweite Druck. Beim Umformen werden die Platten mit höherem Druck beaufschlagt, um die Platten relativ zueinander zu fixieren und einen Gegendruck zu dem eingeleiteten Medium zum Innendruckumformen zu generieren und um die Kanalstrukturen abzudichten, um eine hohe Maßhaltigkeit zu erzielen. Danach wird der beaufschlagte Druck reduziert, was mit der steigenden Temperatur einhergeht, da hohe Temperaturen das Anhaften begünstigen. Durch den reduzierten Druck werden Normalspannungen in den Platten vermindert, die einer Ursache für das Anhaften von Plattenmaterial am Werkzeug sind.

Eine derartige Druckvariation kann durch federnd gelagerte Werkzeuge ermöglicht und unterstützt werden. Bei der Verwendung von federnd gelagerten Werkzeugen kann auch der Aufheizvorgang beeinflusst werden, indem die Wärmeleitung zwischen dem Werkzeug und den Platten durch eine Variation des Anpressdrucks verändert wird.

Nach dem löttechnischen Verbinden der Platten werden diese wieder abgekühlt. Das Abkühlen kann durch Beaufschlagung mit einem Kühlmedium in oder nach Entnahme aus dem Werkzeug erfolgen. Alternativ kann der Plattenwärmetauscher auch in ein Kühlwerkzeug oder ein Kühlgestell überführt werden. Auch eine Kombination dieser oder weiterer Verfahrensschritte ist möglich.

Insbesondere kann das Medium für das innendrucktechnische Umformen zum Abkühlen oder zur Unterstützung des Abkühlprozesses verwendet werden. Handelt es sich bei dem Medium um ein inertes Gas, etwa Stickstoff, ergibt sich der zusätzliche Vorteil, dass die Bildung einer Oxidschicht verhindert wird. Zudem erfolgt das Abkühlen etwas gleichmäßiger und reduziert eine Verformung der Platten, die durch innere Spannungen hervorgerufen werden können.

Bevorzugt ist die Abkühlzeitspanne zwischen dem löttechnischen Verbinden und der Loterstarrung kürzer als 60 Sekunden, bevorzugt kürzer als 20 Sekunden, besonders bevorzugt kürzer als 10 Sekunden. Diese kurze Abkühlzeit hat zur Folge, dass sich in der Lotschicht eutektische Gefügestrukturen mit einer längsten Ausdehnung von weniger als 50 Mikrometern ausbilden. In herkömmlichen Verfahren sind diese Gefüge deutlich grobkörniger und bilden längliche, nadelförmige Strukturen mit einer Länge von 200 Mikrometern oder mehr. Diese entstehen, da in herkömmlichen Lötverfahren, etwa Ofenlöten, die Abkühlung mehrere zehn Minuten dauern kann und die Strukturen sich in dieser Zeit entwickeln. Das feinkörnige Gefüge führt aber dazu, dass die Lotverbindung deutlich stabiler und ermüdungsresistenter ist. Insbesondere im Übergangsbereich zwischen den in Anlage befindlichen Platten und den Kanalstrukturen bildet sich das feinkörnige Gefüge aus und verhindert vorzeitige Risse und Auseinanderklaffen der Platten in diesem im Betrieb stark belasteten Bereich. Dadurch wird die Lebensdauer erfindungsgemäßer Plattenwärmetauscher deutlich erhöht.

Weiterhin bevorzugt schließt sich binnen weniger als 72 Stunden nach dem Abkühlen eine Wärmebehandlung bei einer Temperatur von 140°C bis 250°C über einen Zeitraum von 20 Minuten bis 24 Stunden, bevorzugt von 20 Minuten bis 8 Stunden, besonders bevorzugt von 20 Minuten bis 2 Stunden, an. In vorteilhafter Weise können so die Festigkeitseigenschaften von Plattenwärmetauschern bei der Verwendung von hoch- und höchstfesten Aluminiumlegierungen verbessert werden.

Ein erfindungsgemäß hergestellter Plattenwärmetauscher umfasst zwei Platten aus einem metallischen Material, wobei Kanalstrukturen in zumindest einer Platte ausgebildet sind und die Platten abseits der Kanalstrukturen löttechnisch miteinander verbunden sind dadurch gekennzeichnet, dass in der Lotschicht eutektische Gefügestrukturen mit einer längsten Ausdehnung von weniger als 50 Mikrometern ausgebildet sind. Wie obenstehend bereits erläutert führt ein derartiges Gefüge zu einer dauerhaft stabilen Verbindung der beiden Platten und somit zu einem ermüdungsresistenten Plattenwärmetauscher mit hoher Lebensdauer.

Bevorzugt sind die eutektischen Gefügestrukturen in Lotansammlungen im Übergangsbereich von den in Anlage befindlichen Platten zu den Kanalstrukturen ausgebildet. Dieser Bereich ist im Betrieb besonders hohen Belastungen ausgesetzt, wenn ein Kühlmedium durch die Kanalstrukturen geleitet wird. Folglich führt eine Ausbildung des Gefüges an dieser Stelle zu einer verbesserten Widerstandsfähigkeit gegen Risse und Auseinanderklaffen in diesem empfindlichen Bereich.

Der Plattenwärmetauscher ist durch ein erfindungsgemäßes Verfahren hergestellt.

Der Plattenwärmetauscher ist vorzugsweise innendrucktechnisch hergestellt. Zu den diesbezüglichen Vorteilen wird um Wiederholungen zu vermeiden auf das obenstehend erläuterte verwiesen. Gleiches gilt für die nachfolgend dargestellten Merkmale.

Weiterhin ist vorteilhafterweise eine der Platten eine Grundplatte ist und eine der Platten eine Umformplatte ist, in der die Kanalstrukturen ausgebildet sind.

Die Grundplatte weist dabei bevorzugt eine Dicke von 0,5 bis 5 Millimetern, bevorzugt 1 bis 2 Millimetern, auf.

Die Umformplatte weist bevorzugt eine Dicke von 0,2 bis 2 Millimetern, bevorzugt 0,8 bis 1 Millimeter, auf.

Weiterhin weist in einer bevorzugten Ausführungsform des Plattenwärmetauschers mindestens eine der Platten eine Streckgrenze Rp0,2 im Zugversuch von mehr als 100MPa, bevorzugt mehr als 140MPa, besonders bevorzugt mehr als 160MPa auf.

Es zeigen:
- Figur 1: ein Ausführungsbeispiel für ein erfindungsgemäßes Verfahren
- Figur 2: ein Zeit-Temperatur-Diagramm eines erfindungsgemäßen Verfahrens
- Figur 3: eine Darstellung der Gefügestruktur in der Lotschicht eines erfindungsgemäßen Plattenwärmetauschers

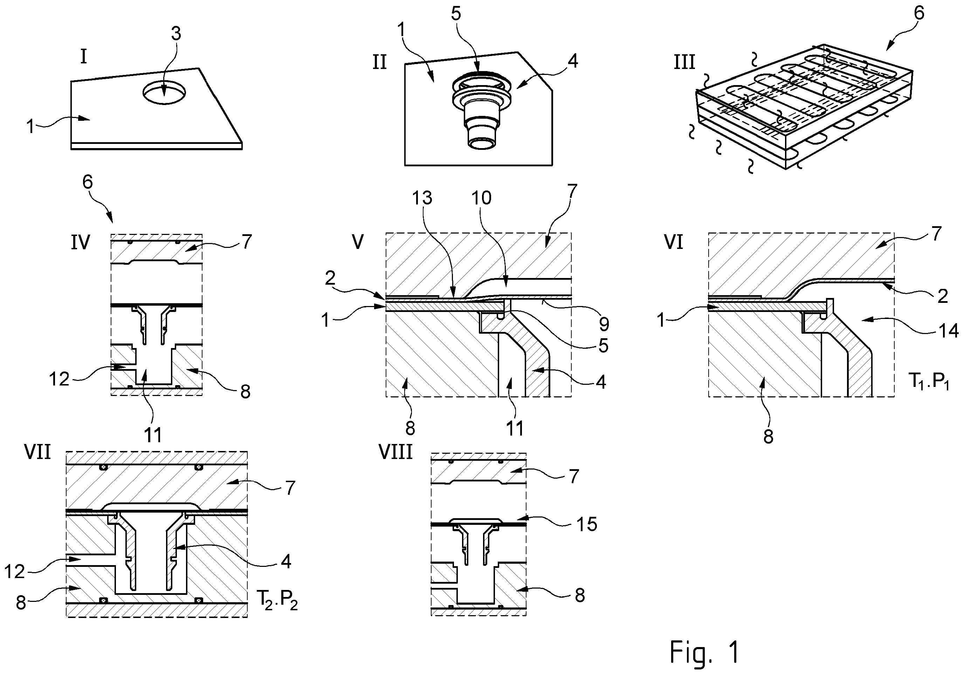

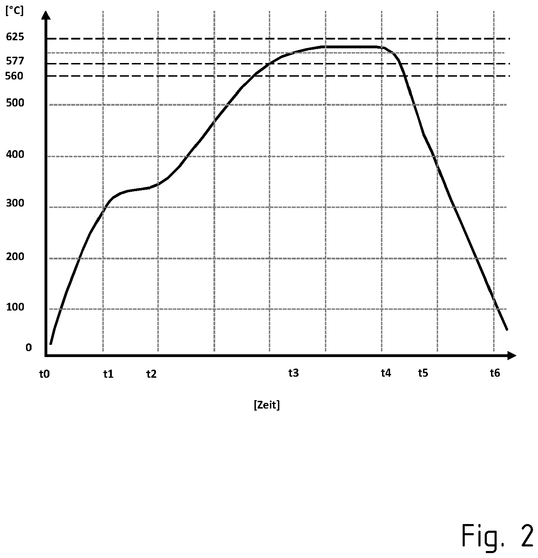

In den Figuren 1 und 2 sind ein erfindungsgemäßes Verfahren zur Herstellung eines Plattenwärmetauschers sowie der dazugehörige Temperaturverlauf schematisch dargestellt. Zunächst werden eine Grundplatte 1 und eine Umformplatte 2 bereitgestellt. Dabei handelt es sich um Platten aus einer 3000er Aluminiumlegierung, beispielsweise einer Legierung mit der Bezeichnung, 3003, 3005, 3903 oder 3905. Die Dicke der Grundplatte 1 beträgt hier 1,3 Millimeter bis 2 Millimeter. Die Dicke der Umformplatte 2 beträgt 0,5 Millimeter bis 1,5 Millimeter. Die Umformplatte 2 ist mit einem Lotwerkstoff plattiert. In der Grundplatte 1 wird eine Anschlussöffnung 3 erzeugt. An der Anschlussöffnung 3 wird ein Anschlusselement 4 zusammen mit einem Lotring 5 angeordnet.

Die Grundplatte 1 und die Umformplatte 2 werden in Anlage gebracht und in ein vorgeheiztes Werkzeug 6 eingelegt. Das Werkzeug 6 ist dabei auf eine Temperatur von etwa 630°C vorgeheizt. Das Werkzeug 6 umfasst ein Oberwerkzeug 7 und eine Unterwerkzeug 8. In der Formfläche 9 des Oberwerkzeugs 7 sind Kavitäten 10 eingebracht, die den vorgesehenen Kanalstrukturen des herzustellenden Plattenwärmetauschers entsprechen. Das Unterwerkzeug 8 weist Aufnahmeöffnungen 11 für das Anschlusselement 4 auf. Zuführungskanäle 12 für ein Medium 14 zum innendrucktechnischen Umformen sind mit den Aufnahmeöffnungen 11 verbunden.

Dann wird das Werkzeug 6 geschlossen. Dies entspricht dem Zeitpunkt t0 in dem Diagramm in Figur 2. Die in dem Werkzeug 6 zur Verfügung gestellte Wärme wird auf die Platten 1, 2 übertragen die somit aufgeheizt werden.

Zu einem Zeitpunkt t1 wird eine vorgesehene erste Temperatur T₁ erreicht, bei der das innendrucktechnische Umformen gestartet wird. Der konkrete Zeitpunkt hängt von der Temperatur des Werkzeugs 6 sowie dem Material und der Dicke der Platten 1, 2 ab. Bei Platten 1, 2 aus Aluminium beträgt auf Grund seiner guten Wärmeleitungseigenschaften die Zeitspanne zwischen t0 und t1 nur wenige Sekunden. Die erste Temperatur T₁ beträgt in diesem Ausführungsbeispiel 300°C bis 350°C.

Für das innendrucktechnische Umformen wird ein Medium 14, vorzugsweise ein inertes Gas wie Stickstoff, unter Druck durch den Zuführungskanal 12, das Anschlusselement 4 und die Anschlussöffnung 3 zwischen die Platten 1, 2 geleitet. Dabei wird die Umformplatte 2 verformt, bis sie mit der Formfläche 9 des Oberwerkzeugs 7 in Anlage kommt. Das Werkzeug 6 beaufschlagt auch die Platten 1, 2 mit einem ersten Druck p₁, um dem Innendruck des Mediums 14 entgegenzuwirken und um die entstehenden Kanalstrukturen abzudichten. Benachbart zu den Kavitäten 10 der Formflächen 9 sind Abdichtsicken 13 vorgesehen, die gewährleisten, dass der Umformvorgang ausschließlich im Bereich der Kavitäten 10 stattfindet. Somit werden eine hohe Maßhaltigkeit und Umformgenauigkeit gewährleistet.

Wenn der Umformvorgang abgeschlossen ist (Zeitpunkt t2), werden die Platten 1, 2 weiter aufgeheizt. Bei etwa 560°C beginnt in diesem exemplarischen Verfahrensverlauf der Lotwerkstoff zu schmelzen. Zu einem Zeitpunkt t3 wird die zweite Temperatur T₂ erreicht. Die zum Aufheizen benötigte Zeitspanne hängt wiederum von den verwendeten Materialien ab. Die zweite Temperatur T₂ beträgt hier von 600°C bis 615 °C, bevorzugt etwa 610°C. Es beginnt das löttechnische Verbinden der Platten 1, 2 unter Beaufschlagung mit Wärme und einem zweiten Druck p₂ durch das Werkzeug 6. Dabei werden die vollflächig in Anlage befindlichen Bereiche der Platten 1, 2 stoffschlüssig verbunden. Gleichzeitig wird das Anschlusselement 4 durch den Lotring 5 stoffschlüssig mit der Grundplatte 1 verbunden.

Der zweite Druck p₂ ist geringer als der erste Druck p₁, um einem möglichen Anhaften der Aluminiumplatten 1, 2 an dem Werkzeug 6 entgegenzuwirken. Zu diesem Zweck weisen das Oberwerkzeug 7 und/oder das Unterwerkzeug 8 eine Federlagerung auf.

Zu einem Zeitpunkt t4 ist das löttechnische Verbinden abgeschlossen. Danach werden die miteinander verbundenen Platten 1, 2 wieder bis auf Raumtemperatur abgekühlt (Zeitpunkt t6). Dazu wird der Plattenwärmetauscher 15 aus dem Werkzeug 6 entnommen und entweder in ein Kühlwerkzeug überführt oder in einem Kühlgestell abgelegt.

Insbesondere kann das Medium für das innendrucktechnische Umformen zum Abkühlen oder zur Unterstützung des Abkühlprozesses verwendet werden. Bei der Verwendung von Stickstoff als inertem Medium ergibt sich der zusätzliche Vorteil, dass die Bildung einer Oxidschicht verhindert wird. Zudem erfolgt das Abkühlen etwas gleichmäßiger und reduziert eine Verformung der Platten, die durch innere Spannungen hervorgerufen werden können.

Optional können währenddessen oder danach weitere Wärmebehandlungsschritte erfolgen.

Zum Zeitpunkt t5 ist der Lotwerkstoff erstarrt. Die Zeitspanne zwischen t4 und t5 ist vorzugsweise sehr kurz und beträgt nur wenige Minuten oder gar Sekunden. Die kurze Abkühlzeit bis zur Loterstarrung führt dazu, dass in der Lotschicht eutektische Gefügestrukturen mit einer längsten Ausdehnung von weniger als 50 Mikrometern ausgebildet sind.

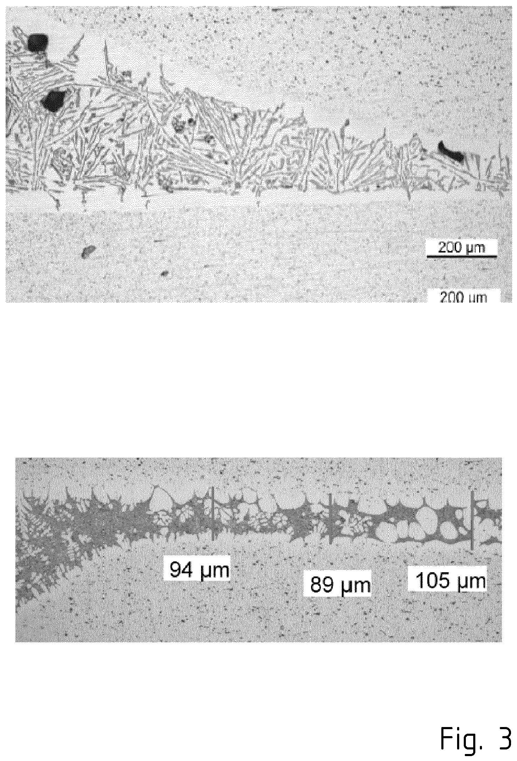

Figur 3 stellt zwei Schliffbilder gegenüber. In der linken Abbildung ist eine Lotansammlung im Übergangsbereich zwischen den Kanalstrukturen und den in Anlage befindlichen Platten 1, 2 dargestellt, die in der Zeichenebene rechts der Abbildung zu finden wären. Diese Lotverbindung wurde in einem herkömmliche Ofenlötprozess mit langen Abkühlzeiten erzeugt. Es sind eutektische Gefügestrukturen ausgebildet, die längsgestreckt oder nadelförmig sind und eine Längenausdehnung von 200 Mikrometern und mehr aufweisen.

Dem gegenüber ist in der rechten Abbildung eine Lotschicht gezeigt, die mit einem erfindungsgemäßen Verfahren erzeugt worden ist. In den dunklen Bereichen sind die entsprechenden eutektischen Gefügestrukturen ausgebildet. Diese sind weitaus feinkörniger als in der linken Abbildung mit Ausdehnungen kleiner als 50 Mikrometer. Das feinkörnige Gefüge führt dazu, dass die Lotverbindung deutlich stabiler und ermüdungsresistenter ist. Insbesondere im Bereich des Übergangs zwischen den Kanalstrukturen und den verlöteten Bereichen ist die wichtig, da dort im Betrieb hohe Belastungen auftreten, die zu Rissen und einem Auseinanderklaffen der beiden Platten 1, 2 führen können.

### Bezugszeichen:

- 1 -: Grundplatte
- 2 -: Umformplatte
- 3 -: Anschlussöffnung
- 4 -: Anschlusselement
- 5 -: Lotring
- 6 -: Werkzeug
- 7 -: Oberwerkzeug
- 8 -: Unterwerkzeug
- 9 -: Formfläche von 7
- 10 -: Kavität
- 11 -: Aufnahmeöffnung
- 12 -: Zuführungskanal
- 13 -: Abdichtsicke
- 14 -: Medium
- 15 -: Plattenwärmetauscher
- p₁ -: erster Druck
- p₂ -: zweiter Druck
- T₁ -: erste Temperatur
- T₂ -: zweite Temperatur
- t0 -: Zeitpunkt
- t1 -: Zeitpunkt
- t2 -: Zeitpunkt
- t3 -: Zeitpunkt
- t4 -: Zeitpunkt
- t5 -: Zeitpunkt
- t6 -: Zeitpunkt

## Patentansprüche

1. Verfahren zum Herstellen eines Plattenwärmetauschers (15) mit folgenden Schritten:
• Bereitstellen zweier Platten (1,2) aus einem metallischen Werkstoff, wobei die Platten (1,2) in Anlage gebracht werden, wobei ein Lotwerkstoff zwischen den Platten (1,2) angeordnet wird,
• Aufheizen der Platten (1,2) auf eine erste Temperatur (T1),
• Einlegen der Platten (1,2) in ein Werkzeug (6), dessen Formflächen (9) Kavitäten (10) für vorgesehenen Kanalstrukturen aufweisen,
• Ausbilden von Kanalstrukturen durch lokale innendrucktechnische Umformung zumindest einer Platte unter Beaufschlagung mit Druck (p1, p2) durch das Werkzeug (6),
• Aufheizen der Platten (1,2) auf eine zweite Temperatur (T2),
• Löttechnisches Verbinden der Platten (1,2) an den in Anlage befindlichen Flächen.

2. Verfahren nach Anspruch 1 **dadurch gekennzeichnet, dass** das Werkzeug (6) beheizbar ist und das Aufheizen auf die erste Temperatur (T₁) in dem Werkzeug (6) erfolgt.

3. Verfahren nach Anspruch 1 oder 2 **dadurch gekennzeichnet, dass** das löttechnische Verbinden der Platten (1,2) ebenfalls in dem Werkzeug (6) erfolgt unter Beaufschlagung mit Druck (p₁,p₂) durch das Werkzeug (6).

4. Verfahren nach Anspruch 2 oder 3 **dadurch gekennzeichnet, dass** das Werkzeug (6) vorgeheizt ist, insbesondere auf eine Temperatur von 550°C bis 700°C, bevorzugt auf eine Temperatur von 600°C bis 650°C, besonders bevorzugt auf eine Temperatur von 615°C bis 625°C vorgeheizt ist.

5. Verfahren nach einem der vorstehenden Ansprüche **dadurch gekennzeichnet, dass** die erste Temperatur (T₁) 200°C bis 550°C, bevorzugt 300°C bis 350°C, beträgt.

6. Verfahren nach einem der vorstehenden Ansprüche **dadurch gekennzeichnet, dass** die zweite Temperatur (T₂) 550°C bis 650°C, bevorzugt 600°C bis 615°C beträgt.

7. Verfahren nach einem der vorstehenden Ansprüche **dadurch gekennzeichnet, dass** benachbart zu den Kavitäten (10) der Formflächen (9) und/oder werkzeugumlaufend Abdichtsicken (13) vorgesehen sind, um bei der innendrucktechnischen Umformung, die entstehenden Kanalstrukturen abzudichten.

8. Verfahren nach einem der vorstehenden Ansprüche **dadurch gekennzeichnet, dass** eine Platte als Grundplatte (1), die andere Platte als Umformplatte (2) vorgesehen ist und die Kanalstrukturen in der Umformplatte (2) erzeugt werden.

9. Verfahren nach einem der vorstehenden Ansprüche **dadurch gekennzeichnet, dass** die Platten (1,2) aus einer Aluminiumlegierung, bevorzugt aus einer hochfesten Aluminiumlegierung, bestehen.

10. Verfahren nach einem der vorstehenden Ansprüche **dadurch gekennzeichnet, dass** eine der beiden Platten (1,2) mit einer plattierten Lotschicht versehen ist.

11. Verfahren nach einem der vorstehenden Ansprüche **dadurch gekennzeichnet, dass** in zumindest einer der Platten (1,2) eine Anschlussöffnung (3) erzeugt wird.

12. Verfahren nach Anspruch 11 **dadurch gekennzeichnet, dass** an oder in dieser Anschlussöffnung (3) ein Anschlusselement (4) angeordnet wird.

13. Verfahren nach Anspruch 11 oder 12 **dadurch gekennzeichnet, dass** das Medium (14) für das innendrucktechnische Umformen durch die Anschlussöffnung (3) eingebracht wird.

14. Verfahren nach einem der vorstehenden Ansprüche **dadurch gekennzeichnet, dass** ein Werkzeug (6) eingesetzt wird, dessen Formflächen (9) mit einer Beschichtung versehen sind, um eine Anhaftung der Platten (1,2) zu verhindern.

15. Verfahren nach einem der vorstehenden Ansprüche **dadurch gekennzeichnet, dass** zwischen den Platten (1,2) und den Formflächen (9) des Werkzeugs (6) ein Trennmittel angeordnet ist, um eine Anhaftung der Platten (1,2) zu verhindern.

16. Verfahren nach einem der vorstehenden Ansprüche **dadurch gekennzeichnet, dass** beim innendrucktechnischen Umformen ein erster Druck (p₁) durch das Werkzeug (6) aufgebracht wird und beim löttechnischen Verbinden der Platten (1,2) ein zweiter Druck (p₂) durch das Werkzeug (6) aufgebracht wird, wobei der erste Druck (p₁) höher ist als der zweite Druck (p₂).

17. Verfahren nach einem der vorstehenden Ansprüche **dadurch gekennzeichnet, dass** die Abkühlzeitspanne zwischen dem löttechnischen Verbinden und der Loterstarrung kürzer als 60 Sekunden, bevorzugt kürzer als 20 Sekunden, besonders bevorzugt kürzer als 10 Sekunden ist.

18. Verfahren nach einem der vorstehenden Ansprüche **dadurch gekennzeichnet, dass** nach dem löttechnischen Verbinden der Platten (1,2) diese in einer Zeit von weniger als 60 Sekunden, bevorzugt weniger als 20 Sekunden, besonders bevorzugt weniger als 10 Sekunden auf eine Temperatur von weniger als 200°C, bevorzugt weniger als 60°C, abgekühlt werden.

19. Verfahren nach einem der vorstehenden Ansprüche **dadurch gekennzeichnet, dass** binnen weniger als 72 Stunden nach dem Abkühlen eine Wärmebehandlung bei einer Temperatur von 140°C bis 250°C über einen Zeitraum von 20 Minuten bis 24 Stunden, bevorzugt von 20 Minuten bis 8 Stunden, besonders bevorzugt von 20 Minuten bis 2 Stunden, anschließt.

## Claims

1. Method for producing a sheet heat exchanger (15) having the following steps:
- providing two sheets (1, 2) made from a metal material, wherein the sheets (1, 2) are put into place, wherein a solder material is arranged between the sheets (1, 2),
- heating the sheets (1, 2) to a first temperature (T1),
- inserting the sheets (1, 2) into a mould (6), the mould surfaces (9) of which have cavities (10) for provided channel structures,
- forming channel structures by local internal pressure forming of at least one sheet with the application of pressure (p₁, pz) by the mould (6),
- heating the sheets (1, 2) to a second temperature (T2),
- soldering the sheets (1, 2) together at the surfaces put into place.

2. Method according to claim 1, **characterised in that** the mould (6) can be heated and the heating to the first temperature (T₁) takes place in the mould (6).

3. Method according to claim 1 or 2, **characterised in that** the soldering together of the sheets (1, 2) is also carried out in the mould (6) with the application of pressure (p₁, p₂) by the mould (6).

4. Method according to claim 2 or 3, **characterised in that** the mould (6) is preheated, in particular to a temperature of 550°C to 700°C, preferably to a temperature of 600°C to 650°C, especially preferably to a temperature of 615°C to 625°C.

5. Method according to any of the preceding claims, **characterised in that** the first temperature (T₁) is 200°C to 550°C, preferably 300°C to 350°C.

6. Method according to any of the preceding claims, **characterised in that** the second temperature (T₂) is 550°C to 650°C, preferably 600°C to 615°C.

7. Method according to any of the preceding claims, **characterised in that** sealing beads (13) are provided adjacent to the cavities (10) of the mould surfaces (9) and/or around the periphery of the mould, in order to seal the resulting channel structures caused during the internal pressure forming process.

8. Method according to any of the preceding claims, **characterised in that** one sheet is provided as a base sheet (1), the other sheet is provided as a forming sheet (2) and the channel structures are produced in the forming sheet (2).

9. Method according to any of the preceding claims, **characterised in that** the sheets (1, 2) consist of an aluminium alloy, preferably a high-strength aluminium alloy.

10. Method according to any of the preceding claims, **characterised in that** one of the two sheets (1, 2) is provided with a sheeted solder layer.

11. Method according to any of the preceding claims, **characterised in that** a connection opening (3) is produced in at least one of the sheets (1, 2).

12. Method according to claim 11, **characterised in that** a connection element (4) is arranged on or in this connection opening (3).

13. Method according to claim 11 or 12, **characterised in that** the medium (14) for the internal pressure forming process is introduced through the connection opening (3).

14. Method according to any of the preceding claims, **characterised in that** a mould (6) is used, the moulding surfaces (9) of which are provided with a coating in order to prevent an adhesion of the sheets (1, 2).

15. Method according to any of the preceding claims, **characterised in that** between the sheets (1,2) and the mould surfaces (9) of the mould (6) a releasing agent is arranged in order to prevent the adhesion of the sheets (1, 2).

16. Method according to any of the preceding claims, **characterised in that** during the internal pressure forming process a first pressure (p₁) is applied by the mould (6) and during the soldering together of the sheets (1, 2) a second pressure (p₂) is applied by the mould (6), wherein the first pressure (p₁) is higher than the second pressure (p₂).

17. Method according to any of the preceding claims, **characterised in that** the cooling time period between the soldering process and the solidification of the solder is less than 60 seconds, preferably less than 20 seconds, especially preferably less than 10 seconds.

18. Method according to any of the preceding claims, **characterised in that** after soldering together the sheets (1, 2) the latter are cooled to a temperature of less than 200°C, preferably less than 60°C, in a period of less than 60 seconds, preferably less than 20 seconds, especially preferably less than 10 seconds.

19. Method according to any of the preceding claims, **characterised in that** within less than 72 hours after cooling, a heat treatment follows at a temperature of 140°C to 250°C over a period of 20 minutes to 24 hours, preferably 20 minutes to 8 hours, especially preferably 20 minutes to 2 hours.

## Revendications

1. Procédé de fabrication d'un échangeur de chaleur à plaques (15) avec les étapes suivantes :
- fournir deux plaques (1, 2) en un matériau métallique, dans lequel les plaques (1, 2) sont amenées en appui, dans lequel un matériau de brasage est agencé entre les plaques (1, 2),
- chauffer les plaques (1, 2) à une première température (T1),
- insérer les plaques (1, 2) dans un outil (6) dont les surfaces formées (9) présentent des cavités (10) pour des structures de canal prévues,
- réaliser des structures de canal par la formation locale par pression interne au moins d'une plaque par alimentation de pression (p₁, p₂) par l'outil (6),
- chauffer les plaques (1, 2) à une seconde température (T2),
- relier par brasage les plaques (1, 2) au niveau des surfaces se trouvant en appui.

2. Procédé selon la revendication 1, **caractérisé en ce que** l'outil (6) peut être chauffé et le chauffage à la première température (T₁) est effectué dans l'outil (6).

3. Procédé selon la revendication 1 ou 2, **caractérisé en ce que** la liaison de brasage des plaques (1, 2) est aussi effectuée dans l'outil (6) par alimentation de pression (p₁, p₂) par l'outil (6).

4. Procédé selon la revendication 2 ou 3, **caractérisé en ce que** l'outil (6) est préchauffé, en particulier à une température de 550 °C à 700 °C, de préférence à une température de 600 °C à 650 °C, le plus préférentiellement à une température de 615 °C à 625 °C.

5. Procédé selon l'une quelconque des revendications précédentes, **caractérisé en ce que** la première température (T₁) s'élève à 200 °C à 550 °C, de préférence à 300 °C à 350 °C.

6. Procédé selon l'une quelconque des revendications précédentes, **caractérisé en ce que** la seconde température (T₂) s'élève à 550 °C à 650 °C, de préférence à 600 °C à 615 °C.

7. Procédé selon l'une quelconque des revendications précédentes, **caractérisé en ce que** des moulures étanches (13) sont prévues de manière contiguë aux cavités (10) des surfaces formées (9) et/ou tournant l'outil, afin de rendre étanche lors de la formation par pression interne les structures de canal apparues.

8. Procédé selon l'une quelconque des revendications précédentes, **caractérisé en ce qu'**une plaque est prévue comme plaque de base (1), l'autre plaque comme plaque de formage (2) et les structures de canal sont générées dans la plaque de formage (2).

9. Procédé selon l'une quelconque des revendications précédentes, **caractérisé en ce que** les plaques (1, 2) se composent d'un alliage d'aluminium, de préférence d'un alliage d'aluminium à haute résistance.

10. Procédé selon l'une quelconque des revendications précédentes, **caractérisé en ce qu'**une des deux plaques (1, 2) est pourvue d'une couche de brasage plaquée.

11. Procédé selon l'une quelconque des revendications précédentes, **caractérisé en ce qu'**une ouverture de raccordement (3) est générée dans au moins une des plaques (1, 2).

12. Procédé selon la revendication 11, **caractérisé en ce qu'**un élément de raccordement (4) est agencé au niveau de ou dans cette ouverture de raccordement (3).

13. Procédé selon la revendication 11 ou 12, **caractérisé en ce que** le fluide (14) pour le formage par pression interne est introduit par l'ouverture de raccordement (3).

14. Procédé selon l'une quelconque des revendications précédentes, **caractérisé en ce qu'**un outil (6) est inséré, dont les surfaces formées (9) sont pourvues d'un revêtement afin d'empêcher une adhérence des plaques (1, 2).

15. Procédé selon l'une quelconque des revendications précédentes, **caractérisé en ce qu'**un moyen de séparation est agencé entre les plaques (1, 2) et les surfaces formées (9) de l'outil (6), afin d'empêcher une adhérence des plaques (1, 2).

16. Procédé selon l'une quelconque des revendications précédentes, **caractérisé en ce que** lors du formage par pression interne, une première pression (p₁) est appliquée par l'outil (6) et lors de la liaison de brasage des plaques (1, 2), une seconde pression (p₂) est introduite par l'outil (6), dans lequel la première pression (p₁) est supérieure à la seconde pression (p₂).

17. Procédé selon l'une quelconque des revendications précédentes, **caractérisé en ce que** l'intervalle de refroidissement entre la liaison de brasage et la prise de brasage est plus court que 60 secondes, de préférence plus court que 20 secondes, le plus préférentiellement plus court que 10 secondes.

18. Procédé selon l'une quelconque des revendications précédentes, **caractérisé en ce qu'**après la liaison de brasage des plaques (1, 2), celles-ci sont refroidies dans un temps de moins de 60 secondes, de préférence moins de 20 secondes, le plus préférentiellement moins de 10 secondes à une température de moins de 200 °C, de préférence moins de 60 °C.

19. Procédé selon l'une quelconque des revendications précédentes, **caractérisé en ce qu'**en l'espace de moins de 72 heures après le refroidissement, un traitement thermique s'ensuit à une température de 140 °C à 250 °C sur une période de 20 minutes à 24 heures, de préférence de 20 minutes à 8 heures, le plus préférentiellement de 20 minutes à 2 heures.
